(19) Europäisches Patentamt
European Patent Office
Office européen des brevets

(11) **EP 1 826 251 A1**

(12) **EUROPEAN PATENT APPLICATION**
published in accordance with Art. 158(3) EPC

(43) Date of publication:
**29.08.2007 Bulletin 2007/35**

(21) Application number: **05795239.2**

(22) Date of filing: **18.10.2005**

(51) Int Cl.:
***C09D 11/00*** *(2006.01)* ***B41J 2/01*** *(2006.01)*
***B41M 5/00*** *(2006.01)*

(86) International application number:
**PCT/JP2005/019461**

(87) International publication number:
**WO 2006/043695 (27.04.2006 Gazette 2006/17)**

(84) Designated Contracting States:
**DE FR GB**

(30) Priority: **21.10.2004 JP 2004307267**

(71) Applicant: **Sony Corporation**
**Minato-ku**
**Tokyo (JP)**

(72) Inventors:
- **Nakashinden, Hiroyuki**
**Minato-ku, Tokyo (JP)**
- **Echizen, Kenji**
**Minato-ku, Tokyo (JP)**

(74) Representative: **Müller, Frithjof E.**
**Müller Hoffmann & Partner**
**Patentanwälte**
**Innere Wiener Strasse 17**
**81667 München (DE)**

(54) **INK, INK CARTRIDGE AND INKJET RECORDING METHOD**

(57) An ink according to the present invention is an ink including a pigment, water, and a water-soluble organic solvent, **characterized in that**
the absorption coefficient Ka to a recording medium is in the range of 9-84.2m1/m2sec$^{1/2}$; and the aforesaid ink is used in a recording apparatus in which a nozzle is placed in a perpendicular direction to the conveyance direction of the aforesaid recording medium, and a head supporting this nozzle is fixed; thus, superior ink fixation properties and printing quality can be obtained.

FIG. 7C

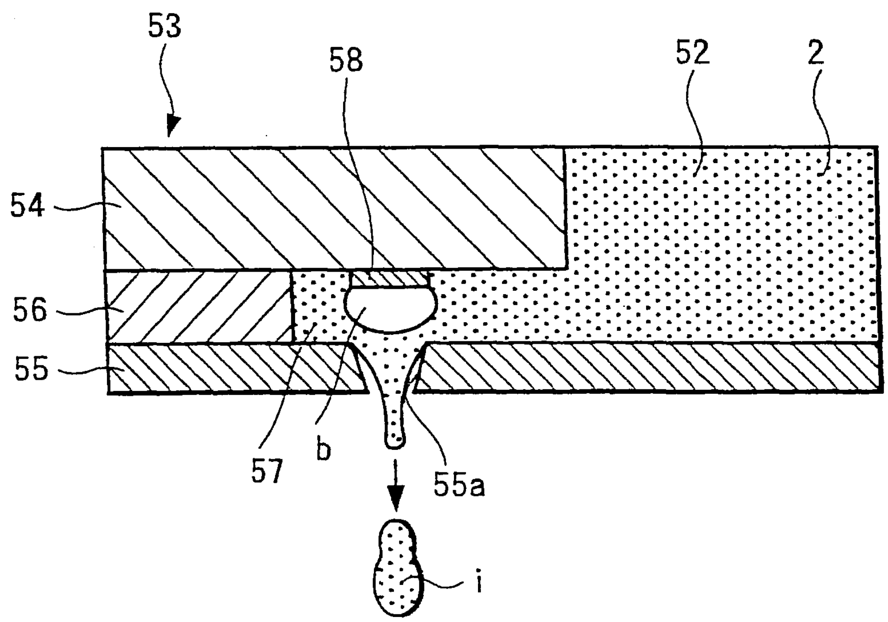


EP 1 826 251 A1

## Description

TECHNICAL FIELD

The present invention relates to an ink, an ink cartridge and an inkjet recording method, wherein ink fixation properties are good and also printing quality is good.

BACKGROUND ART

In recent years, regarding images by color inkjet printers, there has been almost no granular feeling created due to the use of photo ink and the miniaturization of flying droplets, and it has been becoming possible to obtain images which are even closer to photographs.

Also, further swiftness has been achieved by increasing the number of nozzles and augmenting the frequency of ink jets.

In this situation, as properties required for black ink, printing quality of documents to plain paper is required in addition to fixative properties, conservative properties and hues.

It has been reported that it is possible to procure both printing quality and fixative properties, by setting the absorption coefficient Ka to recording paper, measured in accordance with the Bristow method, in the range of 2-10ml/$m^2$·$sec^{1/2}$ (refer to Japanese registered patent No. 2692963, for example).

However, the foregoing printers are serial head printers in which printing takes several tens of seconds per sheet; there is a problem of bad fixation as regards high-speed photographic printing printers such as line head printers.

Also, a method of reducing a droplet amount to obtain fixation in a short period of time can be thought about; in this case, however, the amount of ink per unit area decreases, and so sufficient concentration cannot be obtained, thereby causing printing quality to diminish.

DISCLOSURE OF THE INVENTION

The present invention is aimed at solving the above-mentioned problems, and providing an ink wherein ink fixation properties are good and also printing quality is good.

Also, the present invention is aimed at providing an ink cartridge for accommodating an ink wherein ink fixation properties are good and also printing quality is good.

Also, the present invention is aimed at providing an inkjet recording method wherein ink fixation properties are good and also printing quality is good.

In order to achieve the above-mentioned aims, an ink according to the present invention is designed to be an ink including a pigment, water, and a water-soluble organic solvent; wherein the absorption coefficient Ka to a recording medium is in the range of 9-84.2ml/m2·$sec^{1/2}$; and the aforesaid ink is used in a recording apparatus in which a nozzle is placed in a perpendicular direction to the conveyance direction of the aforesaid recording medium, and a head supporting this nozzle is fixed.

According to the foregoing ink, it is possible to improve absorption into a recording medium, and also to curb running on the recording medium.

An ink cartridge according to the present invention is an ink cartridge accommodating an ink; wherein the aforesaid ink cartridge is used in a recording apparatus in which a nozzle is placed in a perpendicular direction to the conveyance direction of a recording medium, and a head supporting this nozzle is fixed; and the aforesaid ink includes a pigment, water, and a water-soluble organic solvent, and the absorption coefficient Ka to the aforesaid recording medium is in the range of 9-84.2ml/$m^2$·$sec^{1/2}$.

An inkjet recording method according to the present invention is an inkjet recording method in which an ink is jetted from a nozzle; wherein the aforesaid ink includes a pigment, water, and a water-soluble organic solvent, and the absorption coefficient Ka to a recording medium is in the range of 9-84.2ml/$m^2$·$sec^{1/2}$; the aforesaid nozzle is placed in a perpendicular direction to the conveyance direction of the aforesaid recording medium; and a head supporting the aforesaid nozzle is fixed.

According to an inkjet recording method by the present invention, it is possible to improve absorption of an ink into a recording medium, and also to curb running of the ink on the recording medium; therefore, it is possible to perform high-quality recording.

BRIEF DESCRIPTION OF DRAWINGS

FIG. 1 is a figure showing an apparatus for measuring the absorption coefficient Ka of an ink.
FIG. 2 is a figure showing a relationship between the absorption time of an ink and the transfer amount of the ink.
FIG. 3 is a schematic perspective view showing one example of an ink cartridge accommodating an ink according to the present invention, and also showing a printer apparatus incorporating this ink cartridge.
FIG. 4 is a schematic perspective view showing one example of an ink cartridge accommodating an ink according to the present invention.
FIG. 5 is a schematic sectional view showing one example of an ink cartridge according to the present invention.
FIG. 6 is a schematic diagram which helps explain an inkjet recording method according to the present invention.
FIGS. 7A to 7C are schematic diagrams showing a principle of one example of an inkjet recording method according to the present invention.

BEST MODE FOR CARRYING OUT THE INVENTION

The following explains the best mode for carrying out the invention, with respect to an ink, an ink cartridge and an inkjet recording method.
First of all, an ink is to be explained.

[BEST MODE FOR CARRYING OUT THE INVENTION WITH RESPECT TO INK]

An ink according to the present invention is an ink including, a pigment, water, a water-soluble organic solvent, a surfactant and the like.
As the pigment, a carbon black, an organic pigment, an inorganic pigment or the like can be mentioned.
As the carbon black, a publicly known carbon black such as furnace black, acetylene black or channel black can be used. Also, a self-dispersion type carbon black is allowed to be used.
As for the amount of carbon black contained, if it is too small, the photographic printing concentration is low and so printing quality diminishes; meanwhile, if it is too large, there is an increase in viscosity, whereby the flight velocity of an ink lowers, and clogging in an ink nozzle is liable to arise; accordingly, it is desirable that the amount be 1-10 mass%, more desirably 3-7 mass%.
As for the amount of organic pigment contained, if it is too small, the photographic printing concentration is low and so printing quality diminishes; meanwhile, if it is too large, there is an increase in viscosity, whereby the flight velocity of an ink lowers, and clogging in the ink nozzle is liable to arise; accordingly, it is desirable that the amount be 1-10 mass%, more desirably 3-7 mass%.
As for the amount of inorganic pigment contained, if it is too small, the photographic printing concentration is low and so printing quality diminishes; meanwhile, if it is too large, there is an increase in viscosity, whereby the flight velocity of an ink lowers, and clogging in the ink nozzle is liable to arise; accordingly, it is desirable that the amount be 1-10 mass%, more desirably 3-7 mass%.
As the water-soluble organic solvent used in the ink according to the present invention, it is desirable that at least one kind amongst an aliphatic monohydric alcohol, a polyhydric alcohol and a polyhydric alcohol derivative be used.
As the aliphatic monohydric alcohol, ethyl alcohol, isopropyl alcohol, n-propyl alcohol or the like is desirable.
As the polyhydric alcohol, a glycol such as ethylene glycol, diethylene glycol, triethylene glycol, tetraethylene glycol, propylene glycol, dipropylene glycol, butylene glycol, glycerol, hexylene glycol, polyethylene glycol or polypropylene glycol; or a derivative thereof is desirable in terms of preventing head clogging and the freezing of ink.
As the polyhydric alcohol derivative, a lower alkyl ether of any of the above-mentioned polyhydric alcohols, such as ethylene glycol dimethyl ether; a lower carboxylic acid ester of any of the above-mentioned polyhydric alcohols, such as ethylene glycol diacetate; or the like is desirable.
Also, a pyrrolidone such as 2-pyrrolidone or N-methyl-2-pyrrolidone, or other water-soluble organic solvent used for inkjet printing is allowed to be used.
As for the amount of the foregoing water-soluble organic solvent contained, if it is too small, clogging in the ink nozzle is liable to arise; whereas if it is too large, there is a high-viscosity ink whereby the flight velocity of the ink lowers; accordingly, it is desirable that the amount be 1-40 mass%, more desirably 5-20 mass%.
As the surfactant, it is desirable that acetylene glycol be used; for example, OLFINE E1010 (Chemical Formula 1) produced by Nissin Chemical Industry Co., Ltd. can be mentioned. Besides, an anionic surfactant such as a fatty acid salt, a higher alcohol sulfate, a liquid fatty oil sulfate or an alkyl aryl sulfonate; a nonionic surfactant such as a polyoxyethylene alkyl ether, a polyoxyethylene alkyl ester or a polyoxyethylene sorbitan alkyl ester; or the like can be used.
As for the amount of the foregoing surfactant contained, if it is too small, permeation into a recording medium becomes slow and so fixation takes time; therefore, at the time of continuous photographic printing, transfer to the back side can arise, or the thing printed can be rubbed off with the fingers. Meanwhile, if it is too large, running arises and there is a decrease in concentration, so that letters/characters become difficult to see; accordingly, it is desirable that

the amount be 0.1-3 mass%, more desirably 0.2-1.0 mass%.

Further, a defoaming agent, a preservative and a pH adjuster are allowed to be contained in an ink according to the present invention.

Regarding the defoaming agent, a standard defoaming agent which has the effect of curbing the occurrence of bubbles in an ink and enhancing the jetting stability of the ink can be used; for example, an aliphatic monohydric alcohol can be mentioned. It is desirable that the amount of the foregoing defoaming agent contained in the ink be 0.5-20 mass%, more desirably 1-10 mass%.

As the preservative, a chemical compound which has the effect of preventing decay of an ink and enhancing the conservative stability of the ink is used; specifically, sodium dehydroacetate, sodium sorbate, sodium benzoate, pentachlorophenol sodium or the like can be mentioned. It is desirable that the amount of the foregoing preservative contained in the ink be 0.01-5 mass%, more desirably 0.1-2 mass%.

As the pH adjuster, it is advisable to use a pH adjuster which removes effects on a material contiguous with an ink and protects a recording apparatus used, or a standard pH adjuster which has the effect of enhancing the conservative properties of the ink; accordingly, it is desirable to adjust the pH of an ink composition to the range of 7-10.

Also, as the pH adjuster, ammonia; an organic amine such as monoethanolamine, diethanolamine or triethanolamine; an inorganic alkali agent exemplified by an alkali metal hydroxide such as sodium hydroxide or lithium hydroxide; an organic acid; a mineral acid; or the like can be mentioned.

As a production method of an ink, it is possible to employ a method in which an adjustment is made such that a pigment, water, a water-soluble organic solvent, a surfactant and the like are mixed together. Also, it is possible to employ a method in which an adjustment is made such that a dispersion liquid is produced at the beginning by mixing together a pigment, water, a dispersion agent and the like, then this dispersion liquid, water, a water-soluble organic solvent, an additive and the like are mixed together.

According to an examination of the present invention, the following meaning is provided, the greater the value of the absorption coefficient Ka to a recording medium is, the greater the permeation speed is. In conducting continuous photographic printing with a line head, if this absorption coefficient Ka is less than $9ml/m^2 \cdot sec^{1/2}$, a photographic print in a state of insufficient permeation is overlapped by a subsequent photographic print, so that letters/characters will be rubbed off, and transfer to the back will arise. Meanwhile, if this absorption coefficient Ka is greater than $84.2ml/m^2 \cdot sec^{1/2}$, then letters/characters will look blurred, thereby worsening printing quality. Accordingly, it is desirable that the absorption coefficient Ka be in the range of $9\text{-}84.2ml/m^2 \cdot sec^{1/2}$. Additionally, it is more desirable that the absorption coefficient Ka be in the range of $12.7\text{-}77ml/m^2 sec^{\cdot 1/2}$.

The absorption coefficient Ka according to the present invention can be calculated, using a dynamic permeation testing machine in accordance with J.TAPPI No. 51-87. This method is referred to as the Bristow method.

FIG. 1 is a figure schematically showing an apparatus for measuring the absorption coefficient Ka of an ink.

First of all, a liquid of a known amount is completely absorbed into a paper 6 through a slit 7. On this occasion, the absorption time T is defined by the contact time shown by the equation below, in light of the slit width and the movement velocity of a specimen.

$$\text{Absorption time T (ms)} = \text{slit width (mm)} \times 1000 / \text{movement velocity (mm/s) of paper}$$

Meanwhile, as the amount of liquid added to a head box is made Xμ1, and the length of a transfer trace left by the liquid until it finishes being transferred to a paper surface (trace length) is made Amm, the transfer amount V of the liquid is indicated by the following equation:

$$\text{Transfer amount V } (ml/m^2) \text{ of liquid} = X(\mu l) \times 1000 / A(mm) \times \text{slit length (mm)}$$

Absorption characteristics can be known by the absorption time and the transfer amount of a liquid; if the transfer amount is plotted against the square root of the absorption time, there will generally be an absorption curve in FIG. 2, and the following equation is obtained.

$$V = Vr + Ka(T-Tw)^{1/2}$$

Ka is calculated from this equation.

Next, an ink cartridge is to be explained.

[BEST MODE FOR CARRYING OUT THE INVENTION WITH RESPECT TO INK CARTRIDGE]

FIG. 3 shows an inkjet printer apparatus (hereinafter written as a printer apparatus) 1 using an ink cartridge according to the present invention.

The printer apparatus 1 is a so-called line-type printer apparatus capable of high-speed jetting, in which images and letters/characters are printed by jetting ink or the like to a recording paper P running in a predetermined direction.

This printer apparatus 1 has an inkjet printer head cartridge (hereinafter written as a head cartridge) 3 installed in it.

The head cartridge 3 has a cartridge main body 21, and an ink cartridge 5 (described later) is installed in this cartridge main body 21.

This head cartridge 3 is installed from the upper surface side of a printer main body 4, namely in the direction of the arrow A in FIG. 3.

The head cartridge 3 is provided with a jetting means whereby ink is jetted in the form of minute particles, and images, letters/characters and the like are recorded by spraying ink in a state of droplets to the main surface of an object such as the recording paper P. Regarding the head cartridge 3, ink-jetting openings (nozzles) are disposed roughly linearly in the widthwise direction of the recording paper P, namely in the direction of the arrow W in FIG. 3, in such a manner as to correspond with the printing width of the recording paper P, and inks are jetted from the nozzles.

As shown in FIG. 4, ink cartridges 5y, 5m, 5c and 5k, which serve as ink supply sources and are liquid cartridges each accommodating an ink 2, are attached to the head cartridge 3 in a detachable manner. Specifically, there are an ink cartridge 5y of yellow, an ink cartridge 5m of magenta, an ink cartridge 5c of cyanogen and an ink cartridge 5k of black. Note that ink cartridges are allowed to be formed such that a photo ink with less coloring material, or other color than yellow, magenta, cyanogen and black is additionally used.

As shown in FIG. 5, the ink cartridge 5 has a cartridge vessel 11. The cartridge vessel 11 is provided with: an ink accommodating portion 12 which accommodates the ink 2; an ink supply portion 13 which supplies the ink 2 to the cartridge main body 21 of the head cartridge 3 from the ink accommodating portion 12; an external continuous hole 14 through which air is taken into the ink accommodating portion 12 from outside; an air introduction path 15 which introduces the air taken in through the external continuous hole 14 into the ink accommodating portion 12; and a retention portion 16 which temporarily retains the ink 2 between the external continuous hole 14 and the air introduction path 15.

The ink cartridge is not confined to the above-mentioned type of ink cartridge that is divided into sections according to inks. Besides, any kind of ink cartridge commonly used, including one in which a plurality of ink accommodating portions are formed as a single unit, can be employed.

Next, an inkjet recording method is to be explained.

[BEST MODE FOR CARRYING OUT THE INVENTION WITH RESPECT TO INKJET RECORDING METHOD]

FIG. 6 schematically shows a head cartridge 3 used in an inkjet recording method according to the present invention. An ink 2 accommodated in an ink cartridge 5 is supplied to a connecting portion 26 through an ink supply portion 13. The ink 2 is supplied to an ink flow path 52 of an ink-jetting head 27 through an ink holding portion 31, a filter 33, a valve mechanism 34 and an ink supply opening 51, which constitute the connecting portion 26. Further, the ink 2 is supplied to nozzles 55a from the ink flow path 52.

In the ink-jetting head 27 is placed a head chip 53; and in the head chip 53 are disposed the nozzles 55a roughly linearly in the widthwise direction of a recording paper P, namely in the direction of the arrow W in FIG. 6, according to colors.

As shown in FIG. 7A, serving as a jetting means which jets ink droplets from the nozzles 55a, the head chip 53 includes: a board 54 that is a base; a nozzle sheet 55 in which the plurality of nozzles 55a are formed; a film 56 which divides the board 54 from the nozzle sheet 55 and is concomitant with the nozzles 55a; an ink liquid chamber 57 which pressurizes the ink 2 supplied through the ink flow path 52; and a heat element 58 which heats the ink 2 supplied to the ink liquid chamber 57.

The heat element 58 is placed on the board 54 facing the ink liquid chamber 57, and is electrically connected with a control circuit of this board 54. The nozzles 55a are circular minute holes made in the nozzle sheet 55, and are placed opposite the heat element 58.

In this head chip 53, the control circuit of the board 54 controls the heat element 58, supplying a pulse current to the heat element 58. Thus, the heat element 58 is rapidly heated. As a result of it, the ink 2 contiguous to the surface of the heat element 58 is rapidly heated, and the temperature of the ink 2 rises, exceeding a normal boiling point, and reaches a spontaneous nucleation temperature of approximately 330˚C. This heating by the heat element 58 is short-time heating, so that the temperature gradient in the ink liquid chamber 57 becomes extremely steep, and all at once the ink 2 on the surface of the heat element 58 gets into a boiling state, hence a so-called film boiling state. After that, inside a bubble generated by the boiling, active boiling continues, and an ink bubble b grows as shown in FIG. 7B.

Then, as shown in FIG. 7C, the ink 2 in the ink liquid chamber 57 juts out from a nozzle 55a due to the force of the growth of the ink bubble b, the ink bubble b is deprived of heat of vaporization in large quantities owing to its expansion, and a bubble lower in atmospheric pressure than the outside air rapidly contracts. Regarding the ink 2 which has jutted out from the nozzle 55a, a tail protruding outward from the nozzle 55a is cut off because of the inertia of the ink 2 and the contraction of the ink bubble b, and so an ink droplet i is jetted from the nozzle 55a.

Then, an ink 2 which is equal in amount to the ink 2 jetted out from the nozzle 55a is supplied to the ink liquid chamber 57 from the ink flow path 52 by means of the capillary tube power of the nozzle 55a with which the original meniscus (the liquid level of the nozzle 55a) is restored; meanwhile, the ink bubble b contracts further because of the flow of this fresh ink 2, and later disappears.

It should be noted that although the above-mentioned head chip 53 employs an electrothermal conversion method in which an ink 2 is jetted out while heated by the heat element 58, a head chip 53 is allowed for example to employ an electromechanical conversion method in which droplets of an ink 2 are electromechanically jetted out by an electromechanical conversion element such as a piezoelectric element, apart from the foregoing method.

As a recording medium, plain paper can be used. Here, plain paper denotes copy paper internally filled with a sizing agent, commonly used in offices. As plain papers, fine-quality papers, recycled papers and color copy papers used for copying machines, such as My Paper and My Recycle Paper produced by Ricoh Co., Ltd. and P Paper and Green 100 produced by Xerox Corporation, can be mentioned.

It is desirable that the conveyance velocity of a recording medium at the time of photographic printing be in the range of 20-100mm/s. If the conveyance velocity is less than 20mm/s, the target-hitting accuracy of dots improves, but the time required for photographic printing lengthens. Meanwhile, if the conveyance velocity is greater than 100mm/s, the time required for photographic printing shortens, but target-hitting accuracy lowers and letter/character quality therefore diminishes, which is not favorable.

It is desirable that the amount of ink jetted in photographic printing be in the range of 1-50pl/dot. If the amount of ink jetted is less than 1pl/dot, an apparatus for making droplets will have difficulty; further, droplets are subject to air resistance while flying, so that target-hitting accuracy diminishes. Meanwhile, if the amount of ink jetted is greater than 50dl/dot, dots become conspicuous and so the quality of images worsens, which is not favorable.

Thus, according to the best mode for carrying out the present invention, there is an ink including a pigment, water, and a water-soluble organic solvent; wherein the absorption coefficient Ka to a recording medium is in the range of 9-84.2m1/m2·sec$^{1/2}$; and the aforesaid ink is used in a recording apparatus in which a nozzle is placed in a perpendicular direction to the conveyance direction of the aforesaid recording medium, and a head supporting this nozzle is fixed. Therefore, it is possible to improve absorption of an ink into a recording medium, and also to curb running of the ink on the recording medium. As a result of this, it is possible to provide an ink wherein ink fixation properties are good and also printing quality is good.

Also, according to the best mode for carrying out the present invention, an ink cartridge is used in a recording apparatus in which a nozzle is placed in a perpendicular direction to the conveyance direction of a recording medium, and a head supporting this nozzle is fixed; and the aforesaid ink includes a pigment, water, and a water-soluble organic solvent, and the absorption coefficient Ka to the aforesaid recording medium is in the range of 9-84.2ml/m$^2$·sec$^{1/2}$. Therefore, the aforesaid ink cartridge accommodates an ink able to improve absorption into a recording medium and also to curb running on the recording medium. As a result of this, it is possible to provide an ink cartridge which accommodates an ink wherein ink fixation properties are good and also printing quality is good.

Also, according to the best mode for carrying out the present invention, there is an inkjet recording method in which an ink is jetted from a nozzle; wherein the aforesaid ink includes a pigment, water, and a water-soluble organic solvent, and the absorption coefficient Ka to a recording medium is in the range of 9-84.2ml/m$^2$·sec$^{1/2}$; the aforesaid nozzle is placed in a perpendicular direction to the conveyance direction of the aforesaid recording medium; and a head supporting the aforesaid nozzle is fixed. Therefore, the aforesaid inkjet recording method makes it possible to conduct recording in which absorption of an ink into a recording medium is improved and also running of the ink on the recording medium is curbed. As a result of this, it is possible to provide an inkjet recording method wherein ink fixation properties are good and also printing quality is good.

It should be noted that the present invention is not confined to the above-mentioned best mode for carrying out the invention but able to employ various other structures without deviating from the gist of the present invention, of course.

Next, working examples concerning the present invention are to be explained concretely. But note that the present invention is not confined to these working examples.

(Working Example 1)

After mixed together by means of agitation and irradiated with a supersonic wave of 1kW for 30 minutes, the ingredients written below underwent pressure filtration with a fluoropore filter of 3.0μm in pore size, and an ink was thus prepared. The ink composition of Working Example 1:

| | |
|---|---|
| Carbon black (Trade name: CABOJET300 produced by Cabot Corporation) | 5 mass% |
| diethylene glycol | 5 mass% |
| glycerin | 10 mass% |
| OLFINE E1010 (Chemical Formula 1) (surfactant produced by Nissin Chemical Industry Co., Ltd.) | 0.2 mass% |
| Water | 79.8 mass% |

(Chemical Formula 1)

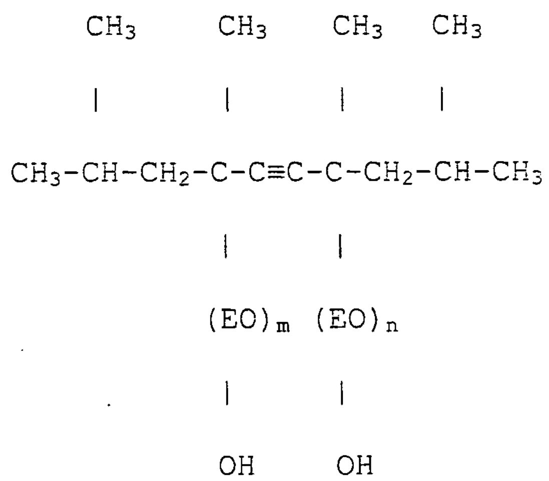

(Here, EO: O-$CH_2$-$CH_2$, and m+n=10.)

The characteristic evaluation written below was carried out, using the above-mentioned ink and a plain paper (P Paper produced by Xerox Corporation).

<Calculation of Absorption Coefficient Ka >

The absorption time T and the transfer amount V of a liquid were measured using a dynamic permeation testing machine (Type S, Toyo Seiki Seisaku-sho,LTD.), and the value of the absorption coefficient Ka was worked out in accordance with the Bristow method.

<Evaluation of Ink Fixation>

A line head printer (LPR-5000 produced by Sony Corporation) was used for an evaluation of ink fixation. An ink cartridge was filled with the ink, and an alphabet of MS 明朝 10pt was printed with this line head printer. The conveyance velocity of the plain paper was 50mm/s, and the amount of ink jetted was 20pl/dot. Immediately after the printing, a Super Fine Paper (produced by SEIKO EPSON CORP.) was laid over a printed part, and a weight of 50g/$cm^2$ was put thereon; then one minute afterward, whether or not there was transfer of letters/characters to the Super Fine Paper was investigated. Symbols for the evaluation are as follows, with O and Δ deemed good results.

○: No transfer

Δ: Transfer slightly found

×: Transfer obviously found

<Evaluation of Character Quality>

On this occasion, Chinese characters "警", "疊" and "静" of MS 明朝 4-6pt were printed with the above-mentioned printer, and the quality was classified into three grades that are A to C, according to how those characters ran. A and B are deemed good results.

A: Edges are sharp, and characters of 4pt are legible
B: Characters of 4pt are illegible, but characters of 5 or 6pt are legible
C: Illegible regardless of the pt number

(Working Example 2)

An ink was prepared in a similar manner to Working Example 1, according to the ink composition written below. The ink composition of Working Example 2:

| | |
|---|---|
| Carbon black | 5 mass% |
| (Trade name: CABOJET300 produced by Cabot Corporation) | |
| diethylene glycol | 5 mass% |
| glycerin | 10 mass% |
| OLFINE E1010 (Chemical Formula 1) | 0.4 mass% |
| (surfactant produced by Nissin Chemical Industry Co., Ltd.) | |
| Water | 79.6 mass% |

A similar evaluation to the one in Working Example 1 was carried out, using a plain paper (My Paper produced by NBS Ricoh Co., Ltd.).

(Working Example 3)

An ink was prepared in a similar manner to Working Example 1, according to the ink composition written below. The ink composition of Working Example 3:

| | |
|---|---|
| Carbon black | 5 mass% |
| (Trade name: CABOJET300 produced by Cabot Corporation) | |
| diethylene glycol | 5 mass% |
| glycerin | 10 mass% |
| OLFINE E1010 (Chemical Formula 1) (surfactant produced by Nissin Chemical Industry Co., Ltd.) | 0.5 mass% |
| Water | 79.5 mass% |

A similar evaluation to the one in Working Example 1 was carried out, using a plain paper (My Paper produced by NBS Ricoh Co., Ltd.).

(Working Example 4)

An ink was prepared in a similar manner to Working Example 1, according to the ink composition written below.

The ink composition of Working Example 4:

| | |
|---|---|
| Carbon black (Trade name: CABOJET300 produced by Cabot Corporation) | 5mass% |
| 2-pyrrolidone | 10 mass% |
| glycerin | 10 mass% |
| OLFINE E1010 (Chemical Formula 1) (surfactant produced by Nissin Chemical Industry Co., Ltd.) | 0.5 mass% |
| Water | 74.5 mass% |

A similar evaluation to the one in Working Example 1 was carried out, using a plain paper (My Paper produced by NBS Ricoh Co., Ltd.).

(Working Example 5)

An ink was prepared in a similar manner to Working Example 1, according to the ink composition written below. The ink composition of Working Example 5:

| | |
|---|---|
| Carbon black (Trade name: CABOJET300 produced by Cabot Corporation) | 5 mass% |
| 2-pyrrolidone | 10 mass% |
| glycerin | 10 mass% |
| OLFINE E1010 (Chemical Formula 1) (surfactant produced by Nissin Chemical Industry Co., Ltd.) | 0.7 mass% |
| Water | 74.3 mass% |

A similar evaluation to the one in Working Example 1 was carried out, using a plain paper (My Paper produced by NBS Ricoh Co., Ltd.).

(Working Example 6)

An ink was prepared in a similar manner to Working Example 1, according to the ink composition written below. The ink composition of Working Example 6:

| | |
|---|---|
| Carbon black (Trade name: CABOJET300 produced by Cabot Corporation) | 5 mass% |
| 2-pyrrolidone | 10 mass% |
| glycerin | 10 mass% |
| OLFINE E1010 (Chemical Formula 1) (surfactant produced by Nissin Chemical Industry Co., Ltd.) | 1.0 mass% |
| Water | 73.5 mass% |

A similar evaluation to the one in Working Example 1 was carried out, using a plain paper (My Paper produced by NBS Ricoh Co., Ltd.).

(Working Example 7)

A similar evaluation to the one in Working Example 1 was carried out, except that the ink in Working Example 5 was used.

(Working Example 8)

A similar evaluation to the one in Working Example 1 was carried out, except that the ink in Working Example 6 was used.

(Comparative Example 1)

A similar evaluation to the one in Working Example 1 was carried out, except that a plain paper (My Paper produced by NBS Ricoh Co., Ltd.) was used.

(Comparative Example 2)

An ink was prepared in a similar manner to Working Example 1, according to the ink composition written below. The ink composition of Comparative Example 2:

| | |
|---|---|
| Carbon black (Trade name: CABOJET300 produced by Cabot Corporation) | 5 mass% |
| 2-pyrrolidone | 10 mass% |
| glycerin | 10 mass% |
| OLFINE E1010 (Chemical Formula 1) (surfactant produced by Nissin Chemical Industry Co., Ltd.) | 1.5 mass% |
| Water | 73.5 mass% |

A similar evaluation to the one in Working Example 1 was carried out, using a plain paper (My Paper produced by NBS Ricoh Co., Ltd.).

Next, an evaluation result of ink fixation and character quality concerning Working Examples 1 to 8 and Comparative Examples 1 and 2 is to be explained. The evaluation result is indicated in Table 1.

[Table 1]

Table 1 Evaluation Result

| | Ka Value | Ink Fixation | Character Quality |
|---|---|---|---|
| Comparative Example 1 | 4.5 | × | A |
| Working Example 1 | 9 | Δ | A |
| Working Example 2 | 12.7 | ○ | A |
| Working Example 3 | 33.9 | ○ | A |
| Working Example 4 | 50.8 | ○ | A |
| Working Example 5 | 63.1 | ○ | A |
| Working Example 6 | 75.6 | ○ | A |
| Working Example 7 | 77 | ○ | A |
| Working Example 8 | 84.2 | ○ | B |
| Comparative Example 2 | 92.3 | O | C |

According to the result of Table 1, as regards Working Examples 1 to 8, ink fixation is O or Δ, and character quality is A or B, hence a good result. The absorption coefficient Ka at that time is in the range of 9-84.2ml/$m^2$·$sec^{1/2}$. As regards Working Examples 2 to 7, ink fixation is o, and character quality is A, hence an even better result. The absorption coefficient Ka at that time is in the range of 12.7-77ml/$m^2$·$sec^{1/2}$.

If the Ka value is 4.5ml/$m^2$·$sec^{1/2}$ as in Comparative Example 1, character quality is good, but ink fixation is bad as a result. Meanwhile, if the Ka value is 92.3ml/$m^2$·$sec^{1/2}$ as in Comparative Example 2, ink fixation is good, but character quality is bad as a result.

In light of these results, in order to procure both character quality and ink fixation, it is desirable that the absorption coefficient Ka be in the range of 9-84.2ml/$m^2$·$sec^{1/2}$, and it is more desirable that the absorption coefficient Ka be in the range of 12.7-77ml/$m^2$·sec1/2. It has been proved that: if the absorption coefficient Ka is less than 9ml/$m^2$$sec^{1/2}$, absorption of ink worsens and so fixation worsens; meanwhile, if the absorption coefficient Ka is greater than 84.2ml/$m^2$·$sec^{1/2}$, ink runs on plain paper, and so character quality worsens.

As described above, an ink according to the present invention is an ink including a pigment, water, and a water-soluble organic solvent; wherein the absorption coefficient Ka to a recording medium is in the range of 9-84.2ml/$m^2$·$sec^{1/2}$; and the aforesaid ink is used in a recording apparatus in which a nozzle is placed in a perpendicular direction to the conveyance direction of the aforesaid recording medium, and a head supporting this nozzle is fixed. Therefore, it has been made possible to provide an ink wherein ink fixation properties are good and also printing quality is good.

Also, the present invention incorporates an ink cartridge accommodating an ink; wherein the aforesaid ink

cartridge is used in a recording apparatus in which a nozzle is placed in a perpendicular direction to the conveyance direction of a recording medium, and a head supporting this nozzle is fixed; and the aforesaid ink includes a pigment, water, and a water-soluble organic solvent, and the absorption coefficient Ka to the aforesaid recording medium is in the range of 9-84·2m1/$m^2$·sec1/2. Therefore, it has been made possible to provide an ink cartridge which accommodates an ink wherein ink fixation properties are good and also printing quality is good.

Also, the present invention incorporates an inkjet recording method in which an ink is jetted from a nozzle; wherein the aforesaid ink includes a pigment, water, and a water-soluble organic solvent, and the absorption coefficient Ka to a recording medium is in the range of 9-84.2ml/$m^2$·$sec^{1/2}$; the aforesaid nozzle is placed in a perpendicular direction to the conveyance direction of the aforesaid recording medium; and a head supporting the aforesaid nozzle is fixed. Therefore, it has been made possible to provide an inkjet recording method wherein ink fixation properties are good and also printing quality is good.

## Claims

1. An ink comprising: a pigment, water, and a water-soluble organic solvent, **characterized in that** the absorption coefficient Ka to a recording medium is in the range of 9-84.2ml/$m^2$.$sec^{1/2}$; and said ink is used in a recording apparatus in which a nozzle is placed in a perpendicular direction to the conveyance direction of said recording medium, and a head supporting this nozzle is fixed.

2. An ink comprising: a pigment, water, and a water-soluble organic solvent, **characterized in that** the absorption coefficient Ka to a recording medium is in the range of 12.7-77ml/$m^2$·$sec^{1/2}$; and said ink is used in a recording apparatus in which a nozzle is placed in a perpendicular direction to the conveyance direction of said recording medium, and a head supporting this nozzle is fixed.

3. An ink according to Claim 1, **characterized in that** the conveyance velocity of a recording medium at the time of photographic printing is in the range of 20-100mm/s.

4. An ink according to Claim 1, **characterized in that** a pigment is carbon black.

5. An ink according to Claim 1, **characterized in that** a recording medium is a plain paper.

6. An ink cartridge accommodating an ink, **characterized in that** said ink cartridge is used in a recording apparatus in which a nozzle is placed in a perpendicular direction to the conveyance direction of a recording medium, and a head supporting this nozzle is fixed; and said ink comprises a pigment, water, and a water-soluble organic solvent, and the absorption coefficient Ka to said recording medium is in the range of 9-84.2ml/$m^2$·$sec^{1/2}$

7. An ink cartridge accommodating an ink, **characterized in that** said ink cartridge is used in a recording apparatus in which a nozzle is placed in a perpendicular direction to the conveyance direction of a recording medium, and a head supporting this nozzle is fixed; and said ink comprises a pigment, water, and a water-soluble organic solvent, and the absorption coefficient Ka to said recording medium is in the range of 12.7-77ml/$m^2$·$sec^{1/2}$.

8. An ink cartridge according to Claim 6, **characterized in that** the conveyance velocity of a recording medium at the time of photographic printing is in the range of 20-100mm/s.

9. An ink cartridge according to Claim 6, **characterized in that** a pigment is carbon black.

10. An ink cartridge according to Claim 6, **characterized in that** a recording medium is a plain paper.

11. An inkjet recording method in which an ink is jetted from a nozzle, **characterized in that** said ink comprises a pigment, water, and a water-soluble organic solvent, and the absorption coefficient Ka to a recording medium is in the range of 9-84.2ml/$m^2$·sec1/2; said nozzle is placed in a perpendicular direction to the conveyance direction of said recording medium; and a head supporting said nozzle is fixed.

12. An inkjet recording method in which an ink is jetted from a nozzle, **characterized in that**

said ink comprises a pigment, water, and a water-soluble organic solvent, and the absorption coefficient Ka to a recording medium is in the range of 12.7-77ml/$m^2 \cdot sec^{1/2}$;
said nozzle is placed in a perpendicular direction to the conveyance direction of said recording medium; and
a head supporting said nozzle is fixed.

**13.** An inkjet recording method according to Claim 11, **characterized in that** the conveyance velocity of a recording medium at the time of photographic printing is in the range of 20-100mm/s .

**14.** An inkjet recording method according to Claim 11, **characterized in that** a pigment is carbon black.

**15.** An inkjet recording method according to Claim 11, **characterized in that** a recording medium is a plain paper.

FIG. 1

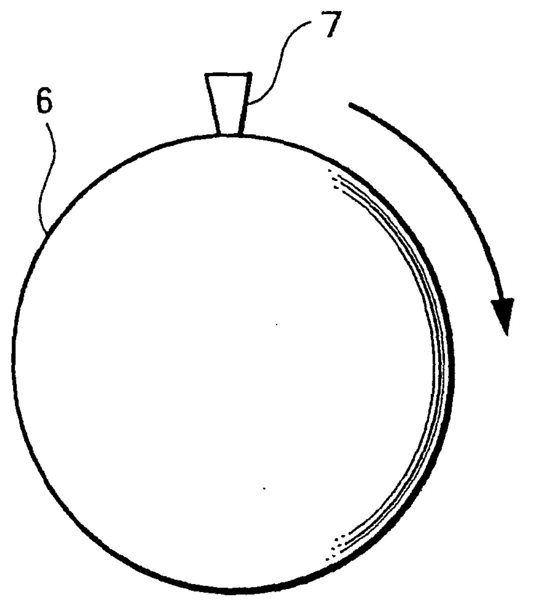


FIG. 2

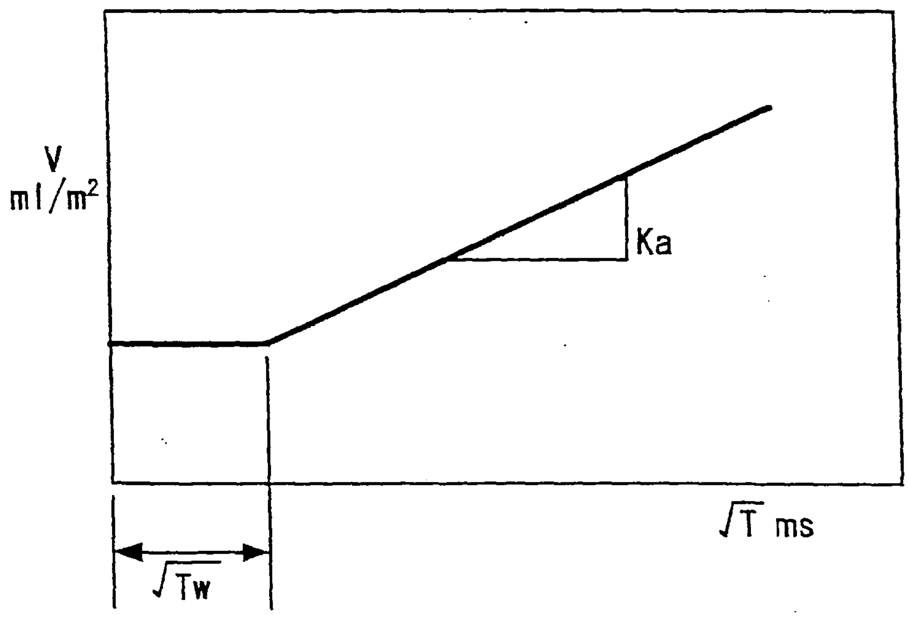

FIG. 3

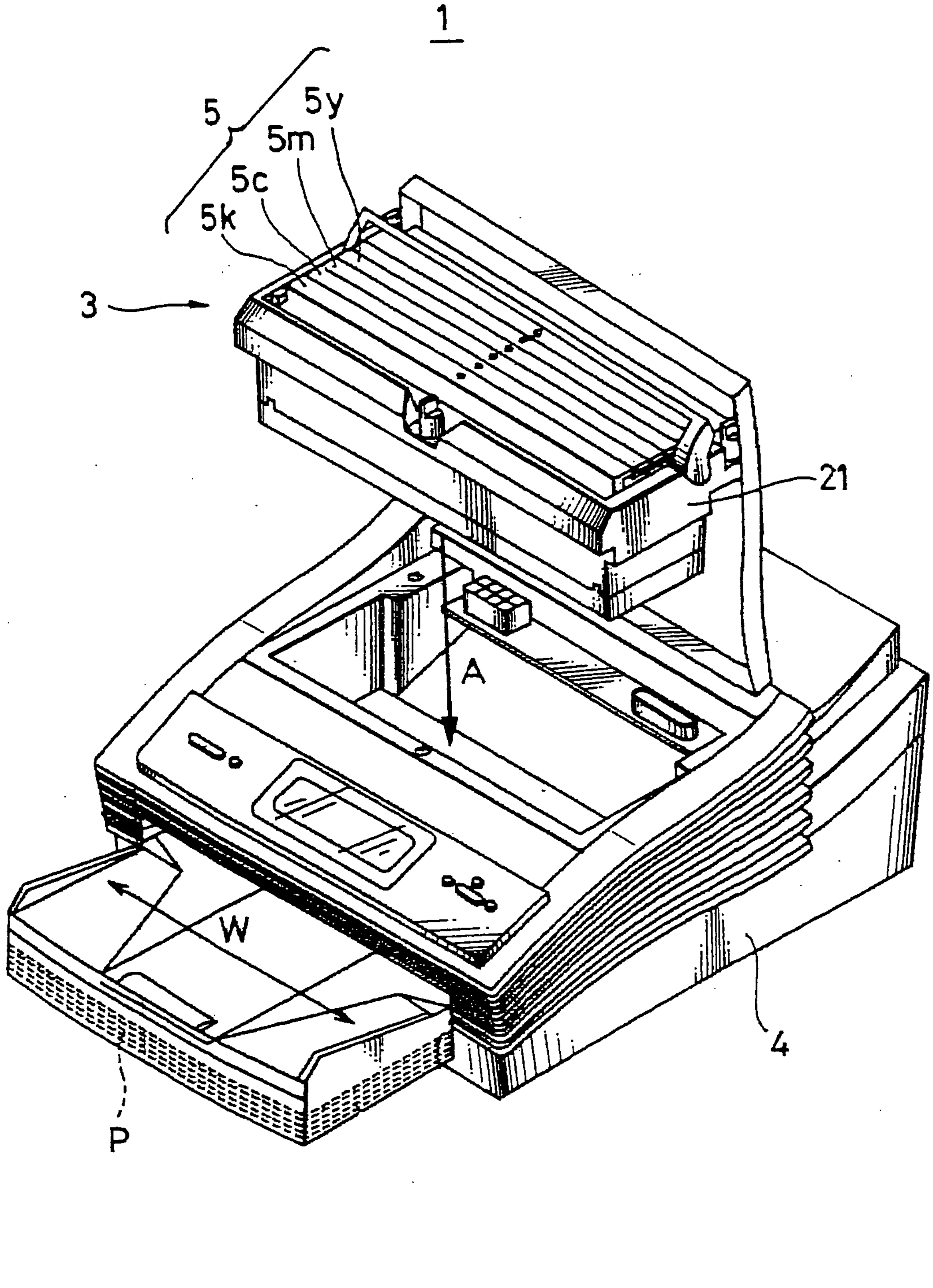

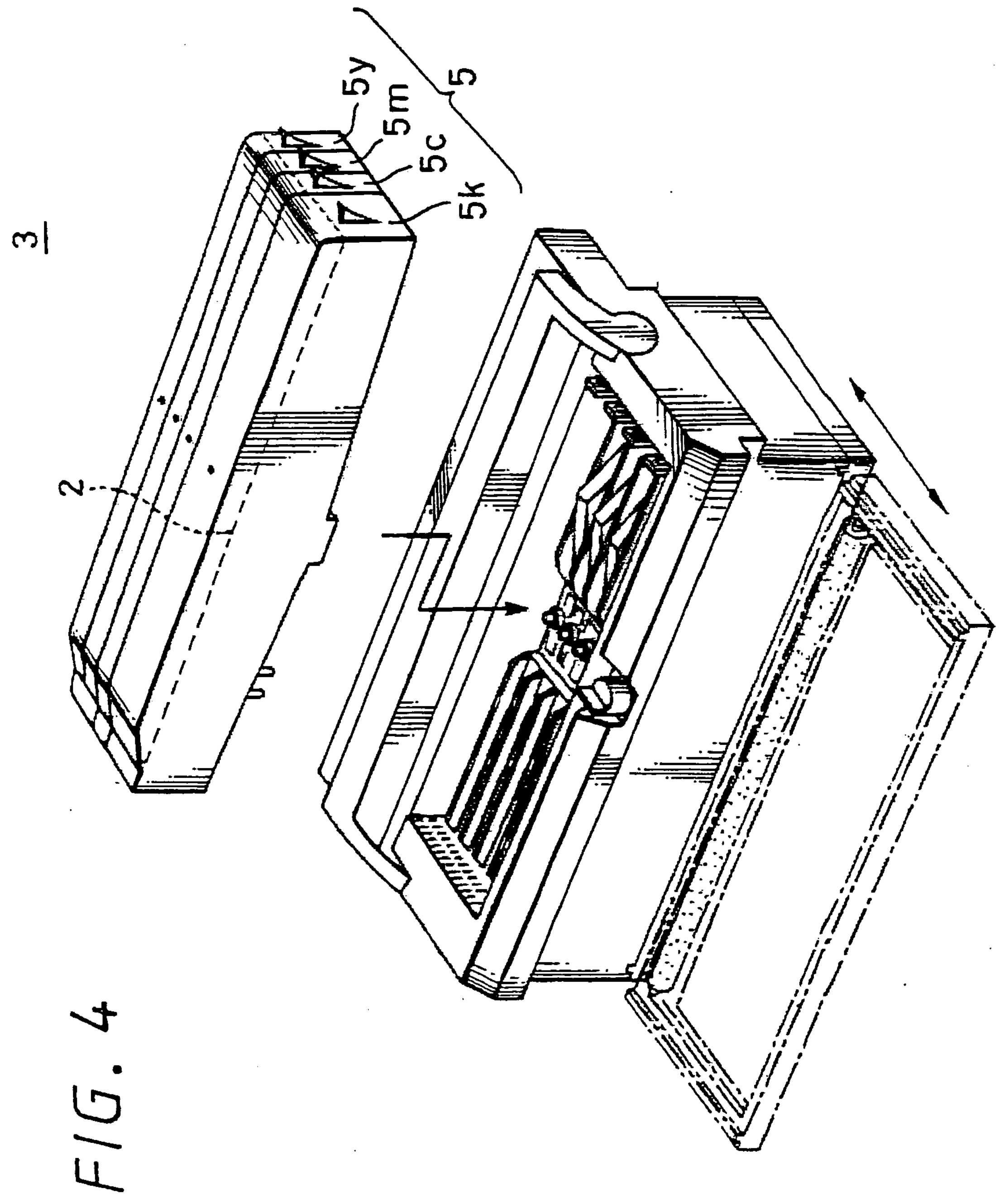


FIG. 4

FIG. 5

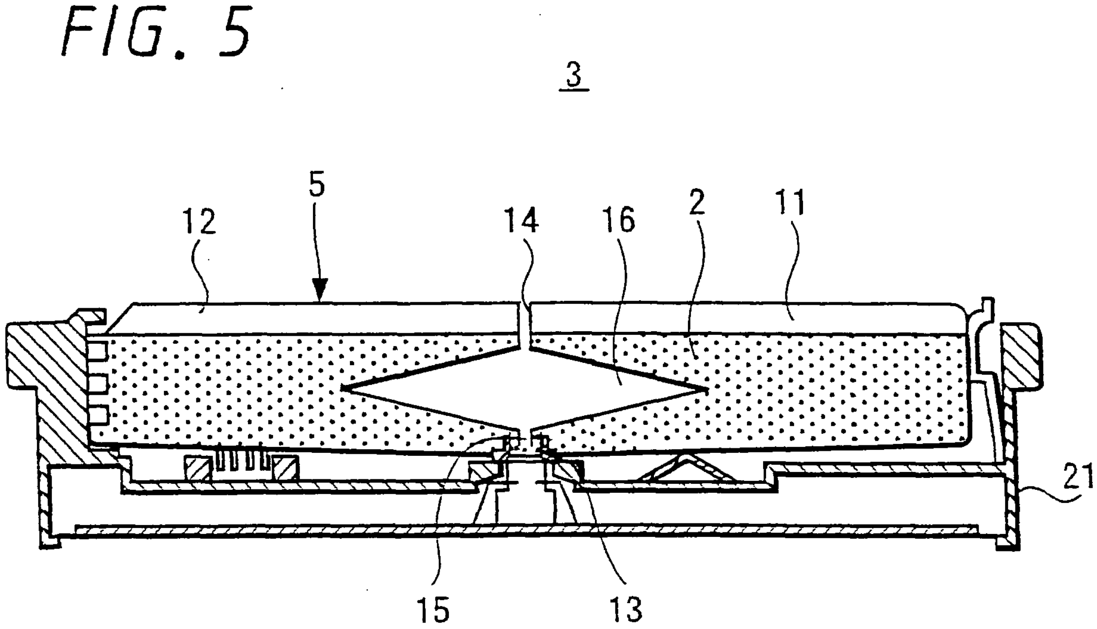


FIG. 6

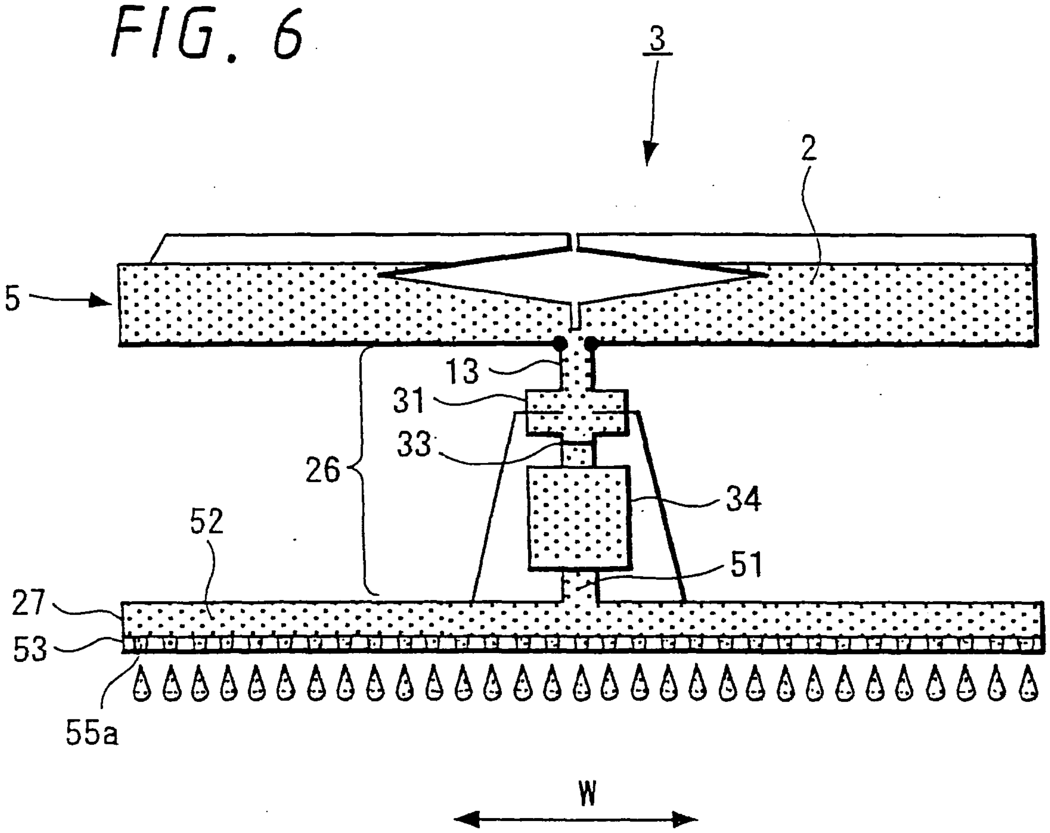

FIG. 7A

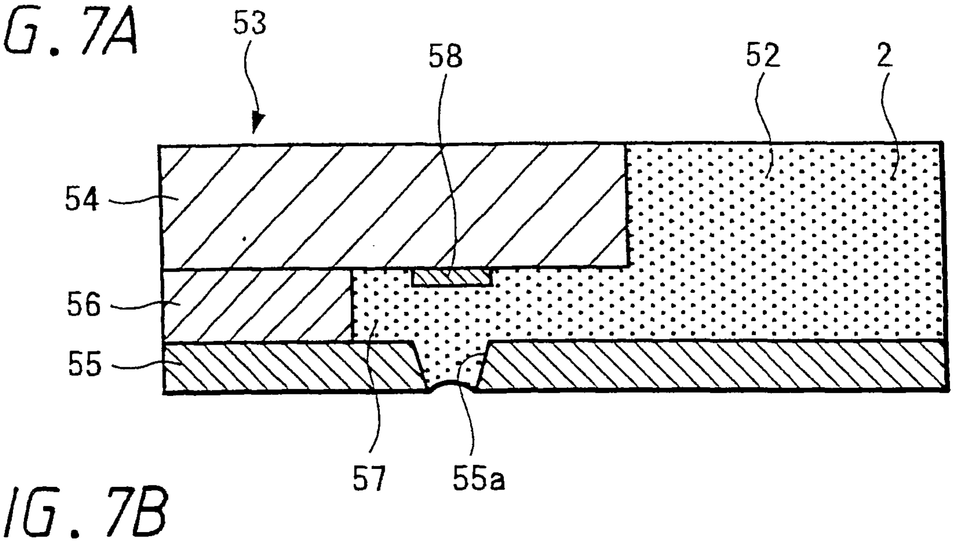


FIG. 7B

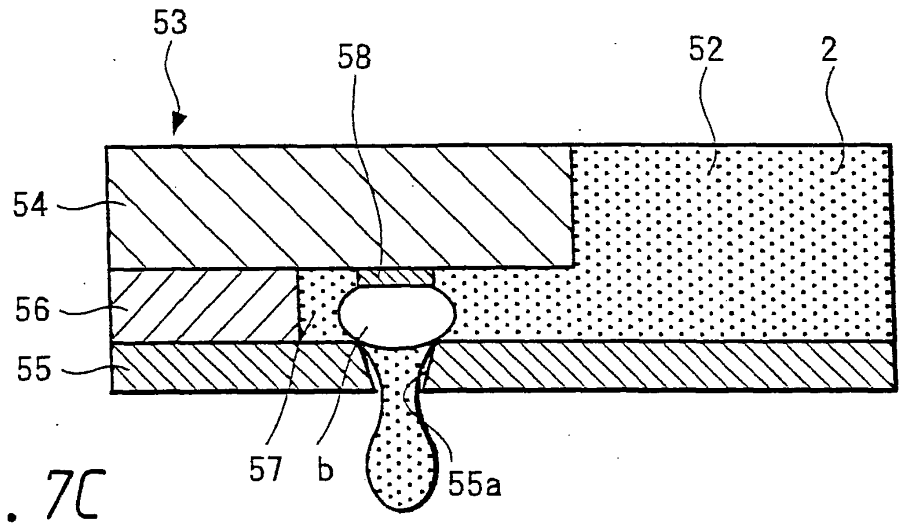


FIG. 7C

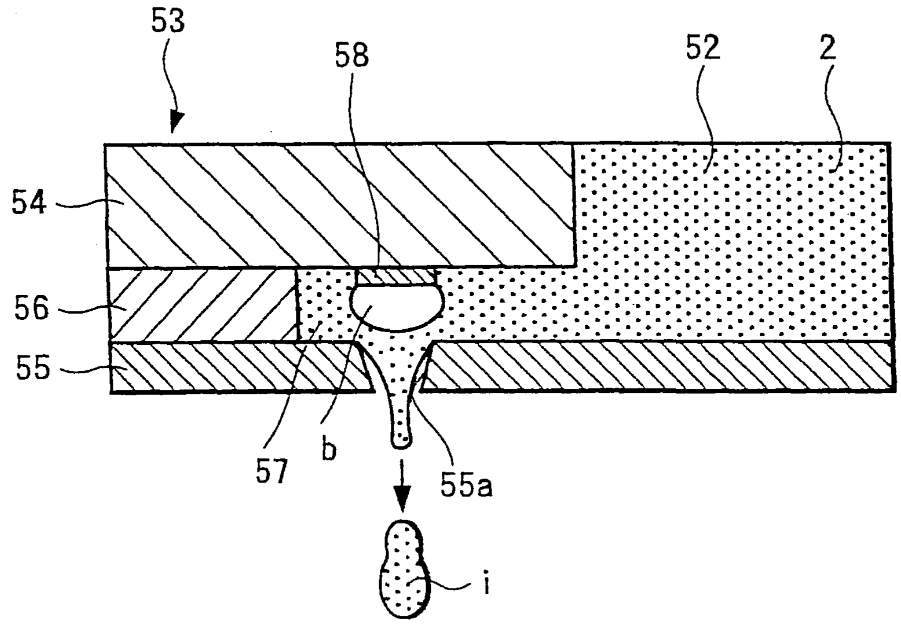

DESCRIPTION OF REFERENCE NUMERALS

1 ... PRINTER APPARATUS

2 ... INK

3 ... HEAD CARTRIDGE

4 ... PRINTER MAIN BODY

5 ... INK CARTRIDGE

5y, 5m, 5c, 5k ... INK CARTRIDGE

6 ... PAPER

7 ... SLIT

11 ... CARTRIDGE VESSEL

12 ... INK ACCOMMODATING PORTION

13 ... INK SUPPLY PORTION

14 ... EXTERNAL CONTINUOUS HOLE

15 ... AIR INTRODUCTION PATH

16 ... RETENTION PORTION

21 ... CARTRIDGE MAIN BODY

26 ... CONNECTING PORTION

27 ... INK-JETTING HEAD

31 ... INK HOLDING PORTION

33 ... FILTER

34 ... VALVE MECHANISM

51 ... INK SUPPLY OPENING

52 ... INK FLOW PATH

53 ... HEAD CHIP

54 ... BOARD

55 ... NOZZLE SHEET

55a ... NOZZLE

56 ... FILM

57 ... INK LIQUID CHAMBER

58 ... HEAT ELEMENT

**INTERNATIONAL SEARCH REPORT**

International application No.
PCT/JP2005/019461

A. CLASSIFICATION OF SUBJECT MATTER
***C09D11/00***(2006.01), ***B41J2/01***(2006.01), ***B41M5/00***(2006.01)

According to International Patent Classification (IPC) or to both national classification and IPC

B. FIELDS SEARCHED

Minimum documentation searched (classification system followed by classification symbols)
B41J2/01-2/21, B41M5/00, C09D11/00-11/20

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 3-45379 A (Canon Inc.), 26 February, 1991 (26.02.91), Claims; examples (Family: none) | 1-15 |
| Y | JP 2003-94749 A (Sony Corp.), 03 April, 2003 (03.04.03), Claims (Family: none) | 1-15 |
| A | JP 2004-249561 A (Canon Inc.), 09 September, 2004 (09.09.04), Claims; examples (Family: none) | 1-15 |

☒ Further documents are listed in the continuation of Box C.    ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 12 January, 2006 (12.01.06) | 24 January, 2006 (24.01.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2005/019461

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-58351 A (Fuji Xerox Co., Ltd.), 26 February, 2004 (26.02.04), Claims; Par. No. [0059]; examples (Family: none) | 1-15 |
| A | JP 2000-336290 A (General Corp.), 05 December, 2000 (05.12.00), Claims; examples (Family: none) | 1-15 |
| A | JP 10-237370 A (Fujitsu Ltd.), 08 September, 1998 (08.09.98), Claims; examples (Family: none) | 1-15 |
| A | JP 7-173419 A (Canon Inc.), 11 July, 1995 (11.07.95), Claims; examples (Family: none) | 1-15 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2692963 B